# EUROPÄISCHE PATENTSCHRIFT

(11) **EP 3 080 011 B1**
(45) Veröffentlichungstag und Bekanntmachung des Hinweises auf die Patenterteilung: **12.07.2017**
(21) Anmeldenummer: 15805496.5
(22) Anmeldetag: 08.12.2015
(51) Int. Cl.: B65D 85/804

(54) **GETRÄNKEKAPSEL, GETRÄNKEZUBEREITUNGSSYSTEM UND VERFAHREN ZUM IDENTIFZIEREN EINER GETRÄNKEKAPSEL**
BEVERAGE CAPSULE, BEVERAGE PREPARATION SYSTEM AND METHOD FOR IDENTIFYING A BEVERAGE CAPSULE
CAPSULE DE BOISSON, SYSTÈME DE PRÉPARATION DE BOISSON ET PROCÉDÉ D'IDENTIFICATION D'UNE CAPSULE DE BOISSON

(30) Priorität: 11.12.2014 EP 14197487
(43) Veröffentlichungstag der Anmeldung: 19.10.2016
(73) Patentinhaber: Qbo Coffee GmbH, 8304 Wallisellen (CH)
(72) Erfinder: ASCHWANDEN, Ivo, 8003 Zürich (CH)
(74) Vertreter: Frei Patent Attorneys
(86) Internationale Anmeldenummer: PCT/EP2015/078938
(87) Internationale Veröffentlichungsnummer: WO 2016/091859

(56) Entgegenhaltungen:
- EP-A1- 2 743 206
- WO-A1-2010/118543
- WO-A1-2011/089048
- US-A1- 2004 089 158
- US-A1- 2013 142 918

## Beschreibung

Die vorliegende Erfindung betrifft eine Getränkekapsel zum Herstellen eines Getränks aus einer in der Kapsel enthaltenen Getränkezutat. Insbesondere betrifft sie eine Getränkekapsel, welche einen Code umfasst, der Informationen über die in der Kapsel enthaltene Getränkezutat oder andere Eigenschaften der Kapsel enthalten kann, und von einer Brühmaschine decodiert werden kann. Die Erfindung betrifft ausserdem ein Getränkezubereitungssystem aus einer Getränkekapsel und einer Brühmaschine, und ein Verfahren zum Identifizieren einer Getränkekapsel in einer Brühmaschine.

Konkret betrifft die vorliegende Erfindung eine Kapsel zur Getränkezubereitung in einer Brühmaschine, welche einen mit einer Getränkezutat gefüllten Kapselbecher mit einem im Wesentlichen quadratischen Boden, und einen auf dem Kapselbecher befestigten Kapseldeckel umfasst. Die Kapsel insgesamt ist dabei vorzugsweise im Wesentlichen würfelförmig, d.h. die seitlichen Wände der Kapsel, welche den Boden und den Deckel verbinden, haben im Wesentlichen die gleiche quadratische Form wie der Boden und der Deckel. Die seitliche Kantenlänge kann aber auch grösser oder kleiner sein, so dass dann eine im Wesentlichen quaderförmige Kapsel entsteht.

Gattungsgemässe Kapseln sind aus der EP 2419352 A1, WO 2015/096989, WO 2015/096990 und WO 2015/096991 bekannt, auf die hiermit Bezug genommen wird.

Einzelportionskapseln zum Zubereiten von Getränken, insbesondere von Heissgetränken wie Kaffee, Tee, Schokoladen- oder Milchgetränken, erfreuen sich stetig wachsender Beliebtheit. Typischerweise enthalten solche Getränkekapseln ein Extraktionsgut, wie beispielsweise gerösteten und gemahlenen Kaffee oder Tee, oder eine oder mehrere lösliche Getränkezutaten wie beispielsweise Instantkaffee, Milchpulver oder Kakaopulver. Neben diesen bekannten Zutaten soll der Begriff "Extraktionsgut" im Rahmen der vorliegenden Erfindung auch ein Reinigungsmittel umfassen, welches zur Reinigung einer Brühmaschine genutzt werden kann.

Es ist bereits bekannt, Getränkekapseln mit einem Code zu versehen, der von der Brühmaschine ausgelesen werden kann, und beispielsweise Information über den Kapseltyp, über die Getränkezutat, oder über für die betreffende Kapsel optimale Brühparameter enthält. Bekannt sind beispielsweise unter anderem aus der EP2168073 Kapseln, auf denen auf einer Deckelmembran ein Barcode aufgebracht ist, oder aus der WO2011/089048A1 Kapseln, auf denen ebenfalls auf einer Deckelmembran ein QR-Code aufgedruckt ist. Auch gemäss WO02/078498A1 wird auf eine Deckelmembran eine maschinenlesbare Kennung aufgebracht, wobei Deckel und Code rotationssymmetrisch ausgestaltet sind. In EP2743206A1, wo Kapseln mit einem Ablenkmittel für den Flüssigkeitsstrom innerhalb der Kapsel beschrieben werden, werden unter anderem auch Kapseln mit einem am eigentlichen Kapselkörper, an einer Seitenwand, angebrachten Code gezeigt. Auch US2013/0142918A1 betrifft ein Kaffeekapselsystem, in welchem die Kapseln ein maschinenlesbares Label aufweisen.

Es ist zwar relativ einfach, einen Code auf einer Deckelmembran bzw. einem Kapseldeckel aufzubringen. Die Deckel werden häufig ohnehin bedruckt und können mit nur wenig zusätzlichem Aufwand mit einem Code versehen werden. Schwierig ist allerdings das Auslesen des Codes auf dem Deckel, insbesondere bei horizontaler Anordnung des Kapsel in einer Brühmaschine, bei denen meistens das Wasser durch den Kapselboden eingeleitet wird, und das Brühprodukt durch die Deckelmembran bzw. den Deckel austritt und in die Tasse geleitet wird. Eine in der Brühkammer auf der Seite des Kapseldeckels vorgesehene Detektionseinheit ist somit immer einer Verschmutzung durch Getränkerückstände, Spritzer, etc. ausgesetzt. Zudem möchte man typischerweise den Weg zwischen dem Austritt des Getränks aus der Kapsel und der Tasse möglichst kurz halten, und es ist daher eine Herausforderung, die Detektionseinheit überhaupt unterzubringen. Die in der EP2168073 und in der WO2011/089048A1 beschriebenen Lösungen eignen sich daher nicht für Kapseln, die in sog. horizontalen Brühmaschinen, d.h. in horizontaler Ausrichtung gebrüht werden.

Weitere Nachteile des Standes der Technik liegen in den verwendeten Codes selbst.

Die Menge und Art an Informationen, die in einem Barcode codiert werden kann, ist stark beschränkt.

QR-Codes und ähnliche bekannte 2-D-Codes können zwar sehr viel mehr Information enthalten und codieren, eignen sich aufgrund ihrer Struktur aber nur bedingt für die Anwendung auf Getränkekapseln, wenn diese in Brühmaschinen ausgelesen werden sollen. Ein häufiges Problem beim Auslesen eines auf einer Kapsel vorgesehenen Codes in einer Brühmaschine sind nämlich Verschmutzungen durch Getränkespritzer, Kalkablagerungen und Ähnliches, welche sowohl auf der Ausleseoptik, als auch je nach Lagerung der Kapseln auf der Kapsel selbst auftreten können.

Gängige optische 2-D-Codes weisen alle sogenannte Finder Patterns auf, deren erfolgreiche Erkennung zwingend notwendig ist, um den Code auslesen zu können. Wenn sich nun gerade im Bereich des Finder Patterns eine lokale Verschmutzung befindet, ist der gesamte Code unlesbar. So kann die Robustheit nicht beliebig erhöht werden indem die Redundanz erhöht wird. Finderpatterns beschränken die maximal erreichbare Robustheit. Das führt dann je nach Programmierung der Maschine zu einer Fehlermeldung, die ein Entnehmen der nicht lesbaren Kapsel erfordert. Falls sich das Problem nicht durch eine Reinigung der Ausleseoptik oder der Kapsel lösen lässt, muss die - an sich geniessbare - Kapsel eventuell sogar verworfen werden, was selbstverständlich aus Kundensicht nicht akzeptabel ist. Ferner sind die Anforderungen an die Kameraoptik und die Rechenleistung des Prozessors der Detektionseinheit bei den bekannten 2-D-Codes in einer Brühmaschine mit vertretbarem Kosten- und Platzaufwand nur schwer umzusetzen.

Aufgabe der vorliegenden Erfindung ist es daher, eine Kapsel der eingangs genannten Gattung zur Verfügung zu stellen, welche mit einem Code versehen ist, der eine ausreichende Menge an Informationen speichern kann, und in der Brühmaschine schnell und mit extrem hoher Erfolgsquote gelesen werden kann. Weiter ist es Aufgabe der Erfindung, ein System aus einer solchen Kapsel und einer Brühmaschine sowie ein Verfahren zur Identifikation einer solchen Kapsel bereit zu stellen, welche die genannten Nachteile überwinden.

Diese Aufgabe wird gelöst durch die in den Patentansprüchen definierte Kapsel, das in den Patentansprüchen definierte System und durch das Verfahren zum Identifizieren einer solchen Kapsel.

Gemäss der Erfindung ist am Boden der Kapsel, mithin des Kapselbechers, zumindest ein erster optisch lesbarer Code vorgesehen bzw. am Boden angebracht. Der erste Code weist eine zweidimensionale Anordnung mehrerer erster Codeelemente auf, die jeweils eine Information enthalten, aus welcher eine von mehreren möglichen Ausrichtungen des Codes in der Ebene des Bodens eindeutig ableitbar ist. Die Codeelemente weisen selbst eine zweidimensionale Gestalt und eine derartige geometrische Kontur auf, die es erlaubt, die Ausrichtung bzw. Orientierung der Codeelemente in der Ebene des Bodens zu bestimmen. Die Ausrichtung einzelner erster Codeelemente korreliert hierbei mit der Ausrichtung des von den Codeelementen gebildeten ersten Codes. Indem vorzugweise jedes Codeelement eine definierte Ausrichtung zur Ausrichtung des Codes aufweist, kann auf der Basis einer Bestimmung der Orientierung eines beliebigen Codeelements eine von mehreren möglichen Ausrichtungen des Codes zuverlässig und eindeutig bestimmt werden. Die Information über die Orientierung des Codes kann insbesondere in jedem Codeelement enthalten sein, sodass zumindest die Ausrichtung des Codes unabhängig vom eigentlichen Auslesen und Decodieren des Codes ohne Weiteres erkennbar ist.

Neben der Ausrichtung kann auch die Position sowie Grösse, horizontale und vertikale Skalierung des Codes, bzw. die Position sowie Grösse, horizontale du vertikale Skalierung eines dem Code zugrunde liegenden Gitters oder Rasters in den Codeelementen selbst kodiert sein.

Den Code auf dem Boden der Kapsel, und nicht auf einem Deckel oder wie in dem oben zitierten Stand der Technik beschrieben auf einer Deckelmembran anzubringen hat verschiedene Vorteile. So steht der Kapseldeckel für eine dekorative Bedruckung, eine für den Benutzer lesbare Information, oder Ähnliches zur Verfügung, und das Design des Deckels wird nicht durch einen zusätzlichen Code beeinträchtigt. Es ist aber ergänzend oder alternativ zu einer Bedruckung des Kapseldeckels auch nicht ausgeschlossen dass der Boden des Kapselbechers zusätzlich zum Code weitere visuell erkennbare Elemente enthält, bspw. dekorative Elemente, ein Kennzeichen oder andere auslesbare Informationen in geeigneter Form; insbesondere kann der Code auch in ein beispielsweise dekoratives Element geeignet integriert sein.

Ausserdem kann aufgrund des Anbringens des Codes auf dem Boden eine Detektionseinheit in einer horizontalen Brühmaschine der Brühkammer vorgelagert, d.h. stromaufwärts der Brühkammer untergebracht werden, wo weniger Verschmutzung durch Getränkespritzer u.ä. droht, und der Einbauraum weniger kritisch ist.

Die gattungsgemässe Kapsel kann aufgrund ihrer Symmetrie und ihres quadratischen Querschnittes in vier verschiedenen Positionen in die Brühmaschine eingeworfen oder eingelegt werden. Es gibt also vier jeweils um 90° gedrehte Orientierungen für die Kapsel, und damit auch für den auf dem Boden der Kapsel vorhandenen Code. Dadurch, dass die einzelnen Codeelemente die Information über die Orientierung des Codes tragen, kann bereits durch das Erkennen und Identifizieren eines einzelnen und beliebigen Codeelements eine von mehreren möglichen Orientierungen des Codes eindeutig bestimmt werden. Die Orientierung des Codes kann so anhand aller festgestellten Orientierungen von Code Elemente über einen Mehrheitsentscheid robust bestimmt werden. Wird die Anordnung der Code Elemente derart gewählt, dass sie sich auf einer gedachten dem Code zugrundeliegenden Gitterstruktur befinden, können zudem Anhand einer beliebigen Auswahl an Code Elementen die Gitterparameter rekonstruiert werden. Die Verwendung sogenannter Finder Pattern für einen 2-D Code wird somit nicht nur überflüssig. Es können vielmehr auch die oben beschriebenen Nachteile, die von einem verschmutzen Finder Pattern herrühren vorteilhaft umgangen werden.

Dadurch, dass die Codeelemente durch ihre Form, ihre Ausrichtung in der Ebene und durch ihre flächenmässige Verteilung in der Ebene eine codierte Information bereitstellen, kann auf die Verwendung von Finder Pattern komplett verzichtet werden. Die Robustheit des Codes, insbesondere im Hinblick auf lokale Verschmutzungen kann insoweit verbessert werden.

Für die Codeelemente gilt insbesondere, dass sie eine nicht rotationssymmetrische geometrische Struktur, sondern vielmehr eine eindeutige, jeweils gedachte Zeigerstruktur definieren oder aufweisen, die zumindest für die mehreren möglichen Ausrichtungen des Codes in der Brühmaschine, d.h. für verschiedene Ausrichtungen in der Ebene des Bodens eindeutig ist.

Durch die hier vorgesehene Kopplung der Codeausrichtung mit der Ausrichtung seiner einzelnen Codeelemente, kann die für ein Decodieren und Auslesen des Codes erforderliche Information für die Codeorientierung von der Decodierung des Codes entkoppelt und unabhängig hiervon bestimmt werden. Dies kann sich vorteilhaft auf die Verwirklichung möglichst geringer und kostengünstiger technischer Anforderungen an eine optische Detektionseinheit und eine nachgeschaltete Bildauswertung auswirken.

Die Bestimmung einer von mehreren möglichen Ausrichtungen des Codes relativ zu einer Detektionseinheit der Brühmaschine, kann auf der Basis mindestens eines Codeelements und seiner Ausrichtung in der Ebene des Bodens bzw. seiner Ausrichtung in einer Bildebene einer Detektionseinheit erfolgen. Die Bestimmung der Ausrichtung des Codes ist somit unabhängig von der Anordnung mehrerer Codeelemente relativ zueinander.

Insbesondere ist die Ausrichtung des Codes in der Ebene des Bodens in jedem Codeelement enthalten, sodass die Information über die Ausrichtung und Orientierung der Kapsel relativ zur Detektionseinheit der Brühmaschine redundant im Code enthalten ist. Dies gilt auch für die dem Code zugrundeliegenden Gitterparameter. Auch diese sind redundant über die ganze Fläche codiert.

Nach einer weiteren Ausgestaltung der Kapsel weist der erste Code eine Anzahl im Wesentlichen identischer und im Wesentlichen identisch ausgerichteter erster Codeelemente auf. Es ist insbesondere denkbar, dass der erste Code ausschliesslich aus identischen Codeelementen besteht. Ferner ist denkbar, dass der erste Code aus identischen Codeelementen besteht, welche zudem auch identisch zueinander ausgerichtet sind. Eine Codeinformation kann insbesondere in der räumlichen und zweidimensionalen verteilten Anordnung einzelner Codeelemente enthalten sein. Das Vorsehen identischer sowie identisch ausgerichteter erster Codeelemente ist nicht nur für die bereits beschriebene eindeutige Bestimmung der Ausrichtung des Codes in der Ebene des Bodens, sondern auch für ein möglichst präzises und fehlerfreies optisches Auslesen des Codes selbst von Vorteil.

Alternativ zur Ausgestaltung des Codes mit identischen, identisch ausgerichteten Codeelementen kann auch vorgesehen sein, dass die Codeelemente nicht identisch sind, indem sie in einer Eigenschaft systematisch oder nicht systematisch voneinander abweichen. Es ist auch möglich, dass der Code zusätzlich zu der Mehrzahl von Codeelementen, die eine Information enthalten, aus welcher die Ausrichtung des Codes in der Ebene des Bodens eindeutig ableitbar ist, weitere Codeelemente aufweist, bei denen das nicht der Fall ist.

Die Detektionseinheit der Brühmaschine ist insbesondere mit einem bildgebenden zweidimensionalen Detektor, bspw. mit einer Kamera versehen. Die Verwendung von ausschliesslich identischen und identisch ausgerichteten ersten Codeelementen ermöglicht die Verwirklichung einer besonders preiswerten Detektionseinheit. Für ein Auslesen und Decodieren des Codes ist unter Umständen lediglich nur ein bereichsweises scharfes und präzises Abbilden des Codes, beispielsweise eines mittigen Bereichs des zweidimensionalen Codes, erforderlich. Für ein Auslesen und Decodieren des Codes kann es insofern bereits ausreichend sein, dass aussenliegende Randbereiche des Codes mit geringerer Schärfe als der mittlere Bereich des Codes in der Detektionseinheit erfasst bzw. abgebildet werden. Diese Robustheit gegenüber Unschärfe oder optischen Fehlern beim Auslesen, welche die erfindungsgemässe Ausgestaltung des Codes mit sich bringt, bewirkt auch eine Robustheit gegenüber Variationen der Codeelemente untereinander. Insbesondere können die Codeelemente in ihrer Grösse, Farbgebung, etc. voneinander abweichen.

Da für die Gewinnung von Codeinformationen nur die Position einzelner Codeelemente innerhalb der Ebene des Bodens bzw. innerhalb von Randbereichen des Codes entscheidend ist, können auch nur vergleichsweise unscharf auf der Detektionseinheit abgebildete Codeelemente für ein fehlerfreies Detektieren, Auslesen und/oder Decodieren des Codes bereits ausreichend sein.

Nach einer weiteren Ausführungsform weisen die ersten Codeelemente zumindest zwei gerade und unter einem vorgegebenen Winkel aneinander angrenzende Linienabschnitte auf. Geradlinige Linienabschnitte der Codeelemente lassen sich in der Detektionseinheit besonders einfach und präzise erfassen. Die Detektionseinheit weist insbesondere eine zweidimensionale regelmässige Anordnung mehrerer optischer bzw. lichtsensitiver (im sichtbaren, infraroten und/oder ultravioletten Teil des elektromagnetischen Spektrums empfindlicher) Sensoren auf, die typischerweise als Detektorpixel zu bezeichnen sind.

Geradlinig verlaufende Linienabschnitte der Codeelemente können auf diese Art und Weise entsprechend der geometrischen Anordnung benachbarter Detektorpixel der Detektionseinheit abgebildet werden. Auf diese Art und Weise kann selbst mit nur einer geringen Anzahl an Detektorpixeln, mithin mittels einer nur eine vergleichsweise geringe Auflösung aufweisenden Detektionseinheit, zumindest die Ausrichtung der Linienabschnitte der Codeelemente zum Zwecke ihrer Ausrichtungsbestimmung aber auch die Lage einzelner Codeelemente innerhalb des 2-D Codes präzise und einfach erfasst werden.

Nach einer Weiterbildung hiervon ist ferner vorgesehen, dass zumindest ein Linienabschnitt der ersten Codeelemente im Wesentlichen parallel zu den Aussenrändern des im Wesentlichen rechteckigen oder quadratischen Codes verläuft. Die Aussenränder des Codes können, müssen aber nicht zwingend, optisch oder visuell erkennbar am Boden des Kapselbechers ausgestaltet sein. Es ist ferner denkbar, dass einzelne aussenliegende Codeelemente die Aussenränder des rechteckigen oder quadratischen Codes allein durch ihre Randlage quasi virtuell markieren. Die parallele Ausrichtung zumindest eines Linienabschnitts zu den Aussenrändern des Codes führt zu einer klar erkennbaren Codestruktur. Insbesondere können anhand visuell oder optisch erkennbarer Aussenränder mögliche und innerhalb eines gewissen Toleranzbereichs liegende geringfügige Abweichungen von den durch die Brühmaschine vorgegebenen mehreren möglichen Ausrichtungen des Codes bzw. der Kapsel erkannt und zur rechnerischen Fehlerkompensation bzw. Bildauswertung verwendet werden.

Für die Erkennung der Codestruktur ist eine parallele Ausrichtung von Linienabschnitten oder von Codeelementen relativ zum Rand des Codes nicht zwingend erforderlich. So kann die Codestruktur auch ausschliesslich in der Position der Codeelemente enthalten sein. Es können beliebige orientierbare Codeelemente verwendet werden, welche in Form und Grösse auch unterschiedlich sein können.

Nach einer weiteren Ausgestaltung verläuft zumindest ein Linienabschnitt der ersten Codeelemente im Wesentlichen parallel zu den Aussenrändern des quadratischen Bodens. Es ist dabei insbesondere vorgesehen, dass auch die Aussenränder des Codes parallel zu den Aussenrändern des quadratischen Bodens verlaufen. Es kann ferner vorgesehen sein, dass die möglichen Ausrichtungen des Codes in der Ebene des Bodens, bzw. die typischerweise vier denkbaren Ausrichtungen der Kapsel in der Brühmaschine, mit vertikal bzw. horizontal verlaufenden Aussenrändern des quadratischen Bodens, bzw. horizontal oder vertikal verlaufenden Aussenrändern des rechteckigen oder quadratischen Codes zusammenfallen. Die Detektionseinheit und die hierin integrierte oder nachgeschaltete Bildauswertung kann insoweit mit einer oder zwei Vorzugsrichtungen (x, y) versehen werden, die parallel zu den Aussenrändern des quadratischen Bodens bzw. parallel zu den Aussenrändern des am Boden vorgesehenen rechteckigen oder quadratischen Codes verlaufen.

Ferner ist denkbar, dass zumindest die ersten Codeelemente ausschliesslich aus Linienabschnitten bestehen, welche sämtlich parallel zu Aussenrändern des Codes verlaufen.

Nach einer weiteren Ausgestaltung sind die ersten Codeelemente im Wesentlichen L-förmig ausgestaltet. Eine L-förmige Ausgestaltung von Codeelementen weist zwei, etwa unter einem rechten Winkel aneinander angrenzende Linienabschnitte auf, welche beide geradlinig ausgestaltet sind, und welche eine im Wesentlichen gleiche oder unterschiedliche Länge aufweisen können. Ein Ende eines ersten Linienabschnitts grenzt hierbei an ein Ende des zweiten Linienabschnitts an. Gegenüberliegende Enden der Linienabschnitte sind dabei voneinander beabstandet. Der Schnittpunkt der Linienabschnitte kann beispielsweise einen Stützpunkt des jeweiligen Codeelements definieren, während einer der beiden Linienabschnitte als Zeigerstruktur fungieren kann. Es ist hierbei denkbar, dass die Linienabschnitte gleiche oder unterschiedliche Längen aufweisen. Ausgehend vom Schnittpunkt der beiden Linienabschnitte kann beispielsweise ein geradliniger Zeiger mit einem der Linienabschnitte, des Codeelements zusammenfallen und auf diese Art und Weise die Ausrichtung des betreffenden Codeelements und hiermit des gesamten Codes in der Ebene des Bodens eindeutig bestimmen. Bei etwa gleich lang ausgestalteten Linienabschnitten ist eine eindeutige Orientierung des jeweiligen Codeelements aus der relativen Lage und Ausrichtung der beiden Linienabschnitte zueinander ableitbar.

Nach einer weiteren und hierzu alternativen Ausgestaltung ist ferner denkbar, dass die ersten Codeelemente zumindest einen Bogenabschnitt aufweisen. Neben L-förmigen Codeelementen kommen eine Vielzahl unterschiedlicher Codeelemente in Frage. Codeelemente mit zumindest einem Bogenabschnitt können beispielsweise eine C-förmige oder U-förmige Geometrie aufweisen. Neben L-förmigen Codeelementen sind insbesondere auch T-förmige oder V-förmige Codeelemente denkbar, die sich durch eine besonders simple geometrische Struktur auszeichnen, sodass selbst bei Verwendung einer Detektionseinheit mit geringer Auflösung, die Bestimmung einer Ausrichtung einzelner Codeelemente zuverlässig und präzise erfolgen kann.

Insbesondere solche Codeelemente, die ausschliesslich aus parallel zu den Coderändern verlaufenden Linienabschnitten bestehen, ermöglichen eine weitreichende Reduzierung der geforderten Auflösung einer Detektionseinheit. Ein L-förmiges Codeelement zeichnet sich insbesondere durch eine minimale Anzahl an Pixeln für eine Detektion aus. Ein L-förmiges Codeelement zeigt ferner ein gutes Verhalten bezüglich Unschärfe bei der Bilderkennung und -auswertung.

Nach einer weiteren Ausgestaltung sind die Codeelemente auf den Boden des Kapselbechers aufgelasert oder in den Boden eingelasert. Das Aufbringen der Codeelemente, mithin des gesamten Codes auf die Aussenseite des Bodens bzw. in das Material des Bodens, erfolgt mittels Laserstrahlung. Es kann hierbei insbesondere vorgesehen sein, dass das Material des Bodens bei Beaufschlagung mit Laserstrahlung in einem bestimmten vorgegebenen Wellenlängenbereich eine Farb- oder Texturänderung erfährt, sodass die hierdurch gebildeten Codeelemente besonders kontrastreich visuell darstellbar sind. Es muss sich dabei nicht zwingend um eine Farbveränderung handeln, die für das menschliche Auge sichtbar ist. Es ist auch denkbar, dass durch den Laser eine Veränderung der Reflektionseigenschaften und/oder Absorptionseigenschaften für IR- oder UV-Strahlung erzielt wird, so dass ein Code entsteht, der nicht mit blossem Auge sichtbar ist, aber von einer Detektionseinheit, die IR- oder UV-Licht verwendet, erkannt werden kann. Es ist ferner denkbar, dass die Codeelemente als Lasergravur am oder im Boden des Kapselbechers verwirklicht sind. Für das Anbringen der Codeelemente und des Codes am Boden des Kapselbechers sind daher keine Druckverfahren oder eine hiermit einhergehende Verwendung von Farbstoffen erforderlich. Somit können auch keine aufgedruckten oder anderweitig aufgebrachten Farbstoffe während des Brühvorgangs gelöst werden und schlimmstenfalls in das Getränk gelangen. Das Auflasern oder Einlasern der Codeelemente auf oder in den Boden des Kapselbechers bewirkt eine besonders langlebige und robuste Codierung des Kapselbechers und damit der gesamten Kapsel.

Nach einer weiteren Ausgestaltung ist vorgesehen, dass der erste Code 50 bis 400 einzelne Codeelemente, und vorzugsweise 70 bis 100 einzelnen Codeelemente umfasst, die zweidimensional und am Boden des Kapselbechers räumlich verteilt angeordnet sind. Die einzelnen Codeelemente sind insbesondere überlappungsfrei zueinander angeordnet. Sie sind insoweit beabstandet zueinander am Boden des Kapselbechers vorgesehen. Mittels der genannten Anzahl an Codeelementen sind insgesamt 100 bis 800 Bit an Informationen in den Boden des Kapselbechers integrierbar. Es ist hierbei insbesondere vorgesehen, dass jeweils ein Codeelement einen Informationsgehalt von 2 Bit enthält. Insbesondere ist der Informationsgehalt eines jeden Codeelements in der relativen räumlichen Position des Codeelements in Bezug auf die restlichen Codeelemente in der Ebene des Bodens enthalten.

Ein Teil der Codeelemente kann der Implementierung von Prüfbits dienen, während ein anderer Teil der Codeelemente sogenannte Informationsbits enthält. Mittels der Prüfbits ist ein fehlerfreies Auslesen und Decodieren bzw. Prüfen des Codes möglich, während die Informationsbits die eigentlichen Träger der Codeinformation sind.

Nach einer weiteren Ausgestaltung ist ferner vorgesehen, dass der erste Code in eine regelmässige gedachte Anordnung von Codefeldern unterteilt ist, welche zumindest paarweise zu Codegruppen zusammengefasst sind. Innerhalb einer Codegruppe ist dabei nur ein einziges Codefeld mit einem Codeelement versehen, während die übrigen Codefelder einer Codegruppe frei bleiben. Weist eine Codegruppe beispielsweise vier aneinander angrenzende Codefelder auf, so werden für das Codeelement vier mögliche Platzhalter bereitgestellt. Eine derartige Codegruppe kann somit Zahlen von 1 bis 4, mithin einen Informationsgehalt von 2 Bit darstellen. Eine Codegruppe kann insbesondere eine zweidimensionale aneinander angrenzende Anordnung mehrerer Codefelder umfassen. Es ist beispielsweise denkbar, dass eine Codegruppe aus vier im Quadrat angeordneten Codefeldern besteht. Es sind jedoch auch andere zweidimensionale Konstellationen, wie zum Beispiel eine rechteckige Codegruppe denkbar, die zum Beispiel aus zwei horizontalen Reihen mit je drei Codefeldern besteht.

Nach einer weiteren Ausgestaltung hiervon enthält die lokale Position eines Codeelements innerhalb der Codegruppe eine Information. Der Gesamtinformationsgehalt einer Codegruppe ist direkt abhängig von der Anzahl zur Codegruppe gehörender Codeelemente. Weist die Codegruppe beispielsweise vier einzelne Codefelder auf, so kann jedes Codefeld per Definition eine einzige Information, beispielsweise eine Zahl "0, 1, 2, 3,..." repräsentieren. Durch Positionierung eines Codeelements in einem einzigen Codefeld einer Codegruppe wird jenes Codefeld und der ihm zugeordnete Wert ausgewählt.

Die regelmässige Unterteilung des Codes in Codefelder und die Belegung einer aus Codefeldern gebildeten Codegruppe mit jeweils nur einem Codeelement führt dazu, dass der jeweilige Code, bezogen auf die Unterteilung in Codegruppen, eine über die Fläche des Codes homogene Dichte an Codeelementen aufweist. Das Vorliegen einer homogenen Informationsdichte kann insoweit bereits auf Bildebene des Codes ein Plausibilitäts- oder Prüfkriterium darstellen, mittels welchem Lesefehler erkannt werden, die z.B. durch Verschmutzungen hervorgerufen sein können, die von der Detektionseinheit und/oder einer nachgeschalteten Steuerung irrtümlich als Codeelemente interpretiert werden. In gleicher Art und Weise kann auch die Position einzelner oder mehrere Codeelemente untereinander ein Prüf- oder Plausibilitätskriterium darstellen.

Nach einer weiteren Ausgestaltung sind mehrere Codegruppen und/oder Codefelder zu einem Codewort zusammengefasst. Die Anzahl an Codegruppen und Codefeldern in einem Codewort kann beliebig gewählt sein. Typischerweise weist jedes Codewort eine identische Anzahl an Codeelementen bzw. eine identische Anzahl an Codegruppen auf. Für die Aufteilung in Codewörter kann vorgesehen sein, dass jedes Codewort aus einer ganzzahligen Anzahl von Codegruppen besteht. Ferner ist denkbar, dass ein Codewort beispielsweise eine oder mehrere Codegruppen sowie einzelne Codefelder umfasst. Ein Codewort kann insbesondere auch ein ungeradzahliges Vielfaches an Codefeldern aufweisen.

Insbesondere können mehrere Plausibilitäts- und/oder Qualitätsprüfungen auf unterschiedlichen Codeebenen implementiert sein. Es ist denkbar, dass eine erste Prüfung hinsichtlich einer vorgegebenen geometrischen Form einzelner Codeelemente erfolgt. Wird beispielweise ein Codeelement mit einer solchen geometrischen Struktur ausgelesen, die von einer vorgegebenen, beispielsweise L-förmigen Geometrie abweicht, kann dies bereits zum Verwerfen oder korrekten Erkennen des Codes führen.

Auf einer weiteren, bspw. zweiten Codeebene ist die Implementierung eines weiteren Prüf- oder Qualitätskriteriums denkbar. Beispielsweise kann hier direkt auf Bildebene geprüft werden ob sich innerhalb eines vorgegebenen Flächensegments der Ebene eine vorgesehene Anzahl an Codeelementen befindet. So kann z.B. eine Integritätsprüfung auf der Ebene einer jeden oder einzelner Codegruppen oder Codefelder durchgeführt werden. Es kann z.B. geprüft werden, ob eine Codegruppe jeweils genau ein Codeelement aufweist. Sind mehrere oder weniger als ein Codeelement pro Codegruppe vorhanden ist das Prüfkriterium nicht erfüllt. Dies kann dann gleichermassen der korrekten oder einer zu korrigierenden Erkennung des Codes dienen.

Schliesslich ist auch denkbar, auch auf der Ebene einzelner oder mehrerer Codewörter eine Plausibilitätsprüfung durchzuführen. So können insbesondere einzelne in Codewörtern enthaltene Prüfbits selektiv gelesen und zur Plausibilitätskontrolle ausgewertet werden. Für sämtliche zuvor beschriebenen Plausibilitäts- oder Qualitätsprüfungen ist eine komplette Dekodierung des Codes nicht erforderlich.

Für eine Decodierung muss grundsätzlich nur ein gewisser Anteil an Codefeldern, Codegruppen oder Codewörtern gelesen werden können. Die Plausibilitätsprüfungen und Qualitätsbewertungen von Codeelementen, Codefeldern, Codegruppen und Codewörtern kann dann dazu verwendet werden um eine gute Auswahl zu treffen, und bei der Decodierung kann die Verlässlichkeit der zur Verfügung stehenden Informationen in den Decodierungsprozess mit einbezogen werden. Es können insbesondere alle sich in einer vorgegebenen Situation ergebenden Decodiermöglichkeiten miteinander vergleichen. Über die Qualitätsbewertung der jeweils ermittelten Decodiermöglichkeiten kann dann eine Entscheidung über den codierten Inhalt mit einer gewissen Wahrscheinlichkeit oder Vertrauenswürdigkeit gefällt werden.

Ferner kann durch die Möglichkeit einer Codeprüfung oder Qualitätsbestimmung auf der Ebene der Codeelemente, auf der Ebene der Codefelder oder Codegruppen und/oder auf der Ebene der Codewörter die Qualität des Codes, d.h. seine Erkennbarkeit mehrfach und somit recht zuverlässig bestimmt werden. Insbesondere kann die Qualität der Codeerkennung auf jeder dieser Ebenen bewertet werden.

Unabhängig hiervon ist generell denkbar, dass eine Bewertung der Qualität aufgenommener Codes auf Bildebene zur Berechnung eines Rasters sowie zur Berechnung einer oder mehreren, dem Code zugrunde liegenden Gitterkonstanten einfliesst.

So kann zur Codeerkennung insbesondere vorgesehen sein, ein Gitter bzw. eine Gitterkonstante des Codes durch Approximation, insbesondere durch sog. "Fitten" zu ermitteln um insoweit eine Skalierung des aufgenommenen Codes durchzuführen. Für jene Skalierung aber auch für die Positionierung eines Gitters kann die auf Bildebene ermittelte Qualität des Codes verwendet werden. Auch kann die Decodierung des Codes selbst mittels der Qualitätserkennung erfolgen oder vereinfacht werden. Da der Code redundant und mehrfach, bspw. in jedem Codewort enthalten ist, können auf der Basis einer Qualitätsbestimmung sämtlicher Codewörter diejenigen Wörter zur Codedekodierung ausgewählt werden, welche unter sämtlichen Codewörtern die höchste Qualität oder höchste Bewertung aufweisen. Decodierfehler können auf diese Art und Weise weitreichend minimiert werden.

Sollte die Decodierung auf der Basis derjenigen Wörter mit der höchsten Qualitätsbewertung nicht möglich sein oder ein nicht plausibles Ergebnis liefern ist vorgesehen, die Gitterkonstante und/oder die Gitterposition zu ändern und die Bewertung und Decodierung erneut durchzuführen.

Nach einer weiteren Ausgestaltung ist ferner vorgesehen, dass die Kapsel neben dem ersten optisch lesbaren Code zumindest einen zweiten optisch lesbaren Code am Boden des Kapselbechers aufweist. Wie auch bereits der erste Code, weist auch der zweite visuell erkennbare Code eine zweidimensionale Anordnung mehrerer zweiter Codeelemente auf, die, bezogen auf einen Mittelpunkt des ersten Codes radial ausserhalb des ersten Codes liegen. Es ist für den ersten Code insbesondere vorgesehen, dass er sich über den Mittelpunkt des Bodens des Kapselbechers erstreckt. Der Mittelpunkt des ersten Codes kann dabei in etwa mit einem geometrischen Mittelpunkt des Bodens des Kapselbechers zusammenfallen.

Die erste und der zweite Code repräsentieren dabei unterschiedliche Codelevel. Der am Kapselboden aufgebrachte Code kann insbesondere zwei- oder mehrstufig ausgestaltet sein, wobei der erste Code eine erste Codestufe oder einen ersten Codelevel und wobei der zweite Code eine zweite Codestufe oder einen zweiten Codelevel definiert.

Betrachtet man die zum Beispiel vier unterschiedlichen möglichen Ausrichtungen des Codes, mithin der Kapsel innerhalb der Brühmaschine, so kann der Mittelpunkt des ersten Codes insbesondere mit einer Drehachse des Kapselbechers zusammenfallen, bezüglich welcher eine Ausrichtung der Kapsel in eine andere denkbare Ausrichtung innerhalb der Brühmaschine überführbar ist.

Durch Vorsehen eines zweiten Codes mit zweiten Codeelementen, können gestaffelt mehrere und unterschiedliche Informationen unterschiedlich robust codiert am Boden des Kapselbechers gespeichert und ausgelesen werden. Der zweite Code kann insbesondere optional vorgesehen sein und optionale Informationen enthalten, die möglicherweise für den Betrieb oder den Brühvorgang der Brühmaschine nicht von Belang oder nur von untergeordneter Bedeutung sind. Es ist insbesondere denkbar, dass im ersten Code Brühparameter bzw. für den Brühvorgang relevante Informationen, wie zum Beispiel eine Wassermenge, Wassertemperatur, Vorbrühzeit, oder ein Sollwert oder eine Sollkurve für die Pumpenleistung, den Durchfluss, oder einen Druck enthalten sind.

Der erste Code kann alternativ auch lediglich eine Information enthalten, welche es erlaubt, die Kapsel, bzw. eine Kapselsorte, zu identifizieren, und ihr beispielsweise ein auf der Maschine abgelegtes Brühprogramm oder Getränkerezept zuzuordnen. Ein Getränkerezept kann dabei über die Brühparameter hinausgehende zusätzliche Rezeptinformationen enthalten, wie z.B. eine Menge und / oder Temperatur von Milch oder Milchschaum, welcher dem gebrühten Getränk zugegeben wird.

Der zweite Code kann z.B. solche zusätzlichen Rezeptinformationen, oder Informationen, wie zum Beispiel ein Mindesthaltbarkeitsdatum, einen Herstellungs- oder Herkunftsort, ein Herstellungsdatum oder auch eine Chargennummer umfassen.

Die räumlich voneinander getrennte Anordnung erster und zweiter Codes ermöglicht ein selektives Auslesen erster und zweiter Codes. Die räumlich getrennte und radial nach aussen gestaffelte Anordnung unterschiedlicher Codes kann ferner für verschiedene Brühmaschinen Verwendung finden. Je nach Ausstattung der Brühmaschine ist der zweite Code verwendbar oder ignorierbar. Optionale Zusatzinformationen zur Kapsel und ihrem Extraktionsgut können beispielsweise über den zweiten Code nur einer bestimmten Gattung oder Ausstattungsvariante von Brühmaschinen zugänglich gemacht werden, die eine entsprechend leistungsfähige Detektionseinheit aufweisen.

Für preiswerte Brühmaschinen kann es hingegen ausreichend sein, lediglich den ersten Code auszulesen. Derartige Maschinen können insoweit auch mit einer dementsprechend abgespeckten Detektionseinheit und Bildauswertung versehen werden, die lediglich den im zentralen Bereich des Bodens des Kapselbechers befindlichen ersten Code visuell erfassen bzw. decodieren.

Nach einer weiteren Ausgestaltung sind die ersten und die zweiten Codeelemente von erstem und zweitem Code im Wesentlichen identisch. Die ersten Codeelemente sind dabei jedoch im Vergleich zu den zweiten Codeelementen unterschiedlich ausgerichtet. Beispielsweise können die ersten Codeelemente relativ zu den zweiten Codeelementen um 90°, um 180° oder um 270° in der Ebene des Bodens des Kapselbechers gedreht ausgerichtet sein. Von Vorteil sind auch hier sämtliche ersten Codeelemente identisch und identisch zueinander ausgerichtet. Gleiches kann auch für die zweiten Codeelemente des zweiten Codes zutreffen.

Darüber hinaus können sämtliche zuvor beschriebenen Eigenschaften und Merkmale der ersten Codeelemente identisch bzw. im Wesentlichen identisch oder entsprechend auch für die zweiten Codeelemente verwirklicht sein.

Nach einem weiteren Aspekt betrifft die Erfindung ferner ein System zum Zubereiten eines Getränks aus einer zuvor beschriebenen Kapsel. Das System umfasst eine Brühmaschine mit einer Brühkammer zur Aufnahme einer Kapsel der vorstehend beschriebenen Art mit einem im Wesentlichen quadratischen Boden zwecks Zubereitung eines Brühgetränks sowie mit einer optischen Detektionseinheit zum Auslesen eines ersten Codes vom Boden des Kapselbechers, während die Kapsel sich in einer Leseposition oberhalb der Brühkammer befindet. Die Kapsel ist in vier verschiedenen Ausrichtungen in der Leseposition positionierbar. Dabei ist die Detektionseinheit derart ausgebildet, dass sie die Ausrichtung einzelner Codeelemente am Boden des Kapselbechers erkennt und daraus die Ausrichtung des Codes ableitet. Auf diese Art und Weise kann die Ausrichtung des Codes allein auf Basis der visuellen Erkennung eines einzigen Codeelements - oder einiger weniger Codeelemente - ohne das Erfordernis einer Analyse des gesamten Codes erfolgen. Für die Bestimmung der Ausrichtung des Codes ist daher eine nur vergleichsweise geringe Rechenleistung einer Bildauswertung erforderlich. Zum System gehört auch mindestens eine entsprechende Kapsel mit quadratischem, den Code tragenden Boden, wobei der Code die Codeelemente aufweist, aus welchen die Detektionseinheit die Ausrichtung des Codes ableitet.

Nicht ausgeschlossen ist dabei, dass Detektionseinheit zusätzlich zu den genannten (ersten) Codeelementen weitere Elemente am Kapselboden erkennt, aus welchen die Detektionseinheit zwar nicht die Ausrichtung des Codes ableitet, welche aber als Elemente des Codes erkannt werden und anhand denen Informationen ausgelesen werden und/oder Elemente, die als nicht zum Code gehörend verworfen werden.

Insbesondere können Teilbereiche des Kapselbodens als nicht zum Code gehörend verworfen werden; solche Bereiche können beispielsweise peripher angeordnet oder auch innerhalb von Aussenrändern des gültigen Codes sein.

Nach einem weiteren Aspekt betrifft die Erfindung ferner ein Verfahren zum Identifizieren einer Kapsel mit einem Kapselbecher, der einen im Wesentlichen quadratischen Boden aufweist, und mit einem Code mit einer zweidimensionalen Anordnung mehrerer Codeelemente auf dem Boden, in einer Brühmaschine zum Zubereiten eines Getränks. Das Verfahren weist hierbei die folgenden Schritte auf:
- Übergeben der von einem Benutzer in die Brühmaschine eingelegten Kapsel in eine Leseposition,
- Erkennen von Codeelementen und Bestimmen der Ausrichtung des Codes anhand der Ausrichtung der Codeelemente,
- Decodieren des Codes und Identifizieren des Kapseltyps anhand der im Code enthaltenen Codeinformation.

Nach erfolgreichem Erkennen eines Codes kann die Codeinformation für die Steuerung der Brühmaschine, insbesondere eines Brühvorgangs verwendet werden.

Es gilt generell, dass sämtlich in Verbindung mit der Kapsel beschriebenen Merkmale und Vorteile auch gleichermassen für das System und das hier beschriebene Verfahren gelten; und umgekehrt.

Der Begriff von im Wesentlichen identischen oder im Wesentlichen identisch ausgerichteten Codeelementen, welcher in Ausführungsformen der Erfindung verlangt wird, bringt zum Ausdruck, dass die Codeelemente im Rahmen der Auflösungsgenauigkeit der Detektionseinheit und der nachgeschalteten Bildauswertung identisch bzw. identisch ausgerichtet am Kapselboden vorgesehen sind. Die Detektionseinheit und die nachgeschaltete Bildauswertung können eine gewisse Fehlertoleranz bereitstellen, sodass selbst geringfügige aber auch grössere Abweichungen von einer vorgegebenen Geometrie, Position und/oder vorgegebenen Ausrichtung der Codeelemente noch zuverlässig erfassbar sind.

Geometrische Abweichungen der Codeelemente hinsichtlich ihrer Längs- oder Quererstreckung von bis zu 10 % oder bis zu 20 %, mithin bis zu 30 % oder sogar bis zu 40% sollen hierbei noch in den Toleranzbereich der Detektionseinheit fallen und können somit noch als im Wesentlichen identisch gelten. Strich- und Liniendicken können hingegen bis zu 200% von einer vorgegebenen Stärke abweichen. Hinsichtlich einer Ausrichtung sind Abweichungen von 5°, bis hin zu 20°, 30° oder sogar 35° tolerierbar, bzw. von der Detektionseinheit und der nachgeschalteten Bildauswertung kompensierbar.

Nachfolgend werden Ausführungsbeispiele der Erfindung anhand von Figuren beschrieben. In den Figuren bezeichnen gleiche Bezugszeichen gleiche oder analoge Elemente. Es zeigen:
- Fig. 1: eine perspektivische Ansicht einer Kapsel zur Getränkezubereitung,
- Fig. 2: eine Seitenansicht der Kapsel gemäss Fig. 1,
- Fig. 3: eine schematische Darstellung einer zur Aufnahme einer Kapsel ausgestalteten Brühmaschine,
- Fig. 4: eine schematische und vereinfachte Darstellung einer in der Maschine vorgesehenen Detektionseinheit zum visuellen Erfassen des Codes am Boden des Kapselbechers,
- Fig. 5: eine schematische Darstellung eines am Boden des Kapselbechers vorgesehenen ersten Codes,
- Fig. 6: eine vereinfachte und schematische Darstellung einer regelmässigen Unterteilung des ersten Codes in einzelne Codefelder, Codegruppen und Codewörter,
- Fig. 7: die unterschiedlichen Positionen eines Codeelements in unterschiedlichen Codefeldern einer Codegruppe,
- Fig. 8: eine vereinfachte schematische Darstellung eines Bodens des Kapselbechers mit einem ersten und mit einem zweiten Code und
- Fig. 9: eine schematische Darstellung zweier unterschiedlicher Codeelemente.

### Detaillierte Beschreibung

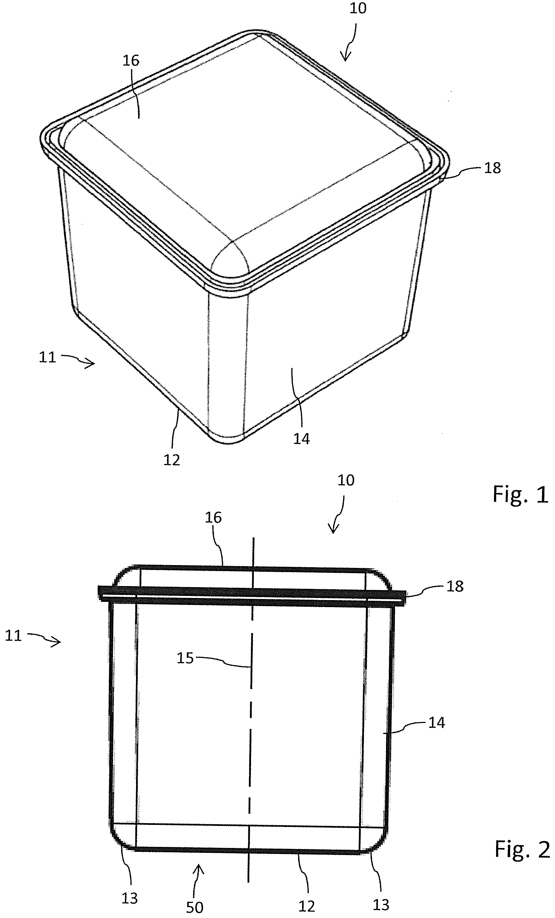

Die in den Fig. 1 und 2 gezeigte Kapsel 10 weist einen topfförmigen Kapselbecher 11 mit einem quadratischen Kapselboden 12 auf. Der Kapselbecher 11 ist dem Boden 12 abgewandt, mit einem sich über den gesamten Querschnitt des Kapselbechers 11 erstreckenden Kapseldeckel 16 verschlossen. Der Kapseldeckel 16 und die Seitenwände 14 des Kapselbechers 11 bilden einen nach aussen ragenden Flanschabschnitt 18. Der umlaufende Flanschabschnitt 18 dient neben einer Verschlussfunktion auch zum Führen und Ausrichten der Kapsel. Eine an einer Brühmaschine 20 vorgesehene Aufnahme 21, typischerweise in Form eines Einwurf- oder Aufnahmeschachts, kann eine der Aussenkontur der in Fig. 2 in Seitenansicht gezeigten Kapsel 10 korrespondierende Geometrie aufweisen, sodass die Kapsel zwingend in einer Orientierung oder Ausrichtung in die Aufnahme 21 der Brühmaschine 20 einführbar ist, in welcher der Boden 12 des Kapselbechers einer Detektionseinheit 24 zugewandt ist.

Aufgrund der quadratischen Geometrie des Bodens 12 des Kapselbechers 11 und des im Wesentlichen quadratischen umlaufenden Flanschabschnitts ergeben sich bei korrekter Positionierung der Kapsel 10 in einer Leseposition L innerhalb der Brühmaschine 20 immer noch vier verschiedene mögliche Orientierungen der Kapsel 10 und des am Boden 12 vorgesehenen optisch lesbaren bzw. visuell erkennbaren Codes 50. Die unterschiedlichen und mehreren möglichen Ausrichtungen des Codes 50 sind durch Drehungen der Kapsel bezüglich ihrer gedachten Drehachse 15 bedingt, die sich im Wesentlichen senkrecht zum Boden 15 und senkrecht zum Kapseldeckel 16 erstreckt, und welche insbesondere mit einem geometrischen Mittelpunkt von Boden 12 und Kapseldeckel 16 zusammenfallen kann.

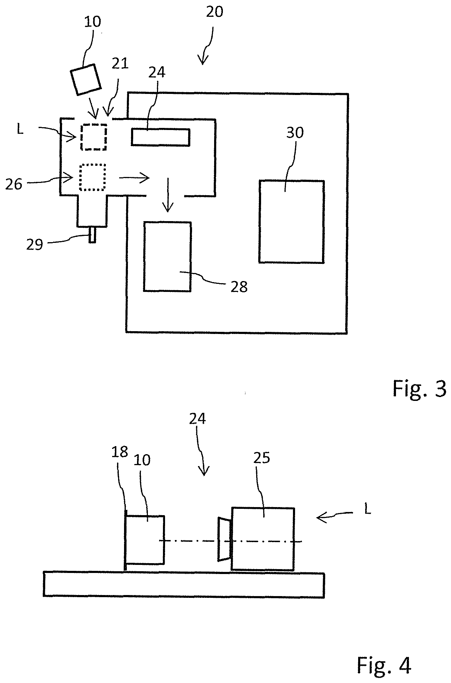

Die in Fig. 3 gezeigte Brühmaschine 20 ist zur Aufnahme zumindest einer Kapsel 10 vorgesehen, welche durch Einführen in die Aufnahme 21 zunächst in einer Leseposition L gehalten werden kann. In jener Leseposition L kann mittels der Detektionseinheit 24 der an der Aussenseite des Bodens 12 des Kapselbechers 11 vorgesehene Code 50 visuell erfasst und einer Bildauswertung zugeführt werden, mittels welcher die codierte Information decodierbar ist. Der Leseposition L nachgelagert, befindet sich eine Brühkammer 26, in welcher die mit Extraktionsgut gefüllte Kapsel 10 angestochen und das Extraktionsgut mit einer für den Extraktionsvorgang vorgesehenen Flüssigkeit, insbesondere mit heissem Wasser, in Kontakt gebracht werden kann. Das Extrakt bzw. das auf diese Art und Weise zubereitete Getränk kann dann über einen Auslass 29 in einem nicht explizit dargestellten Trinkgefäss gesammelt werden. Die verbrauchte Kapsel 10 kann nach dem Brühvorgang einem Auffangbehälter 28 zugeführt werden, welcher von Zeit zu Zeit einer Entleerung bedarf.

Die Brühmaschine 20 ist ferner mit einer Steuerung 30 versehen, die unter anderem mit der Detektionseinheit 24 gekoppelt ist. Eine Bildauswertung kann entweder in der Detektionseinheit 24 oder in der Steuerung 30 enthalten sein. Durch Auslesen der Codeinformation der Kapsel 10 kann der Brühvorgang gesteuert, zumindest aber beeinflusst werden. Beispielsweise kann der Code 50 Informationen zu einem voreingestellten Brühprogramm beinhalten, welches nach dem Erkennen und Auslesen des Codes 50 automatisch durch die Steuerung 30 anwählbar ist. Der Bedienungskomfort der Brühmaschine 20 kann auf diese Art und Weise gesteigert und verbessert werden.

Die Brühmaschine kann ferner mit einem in Fig. 3 nicht dargestellten Motor versehen sein, welcher die Brühkammer öffnet und schliesst. Dieser Motor kann ebenfalls über die Steuerung 30 gesteuert werden, so dass nach erfolgreichem Erkennen und Auslesen des Codes die Kapsel automatisch in die Brühkammer 26 übergeben wird Dadurch wird der Bedienkomfort für den Benutzer erhöht.

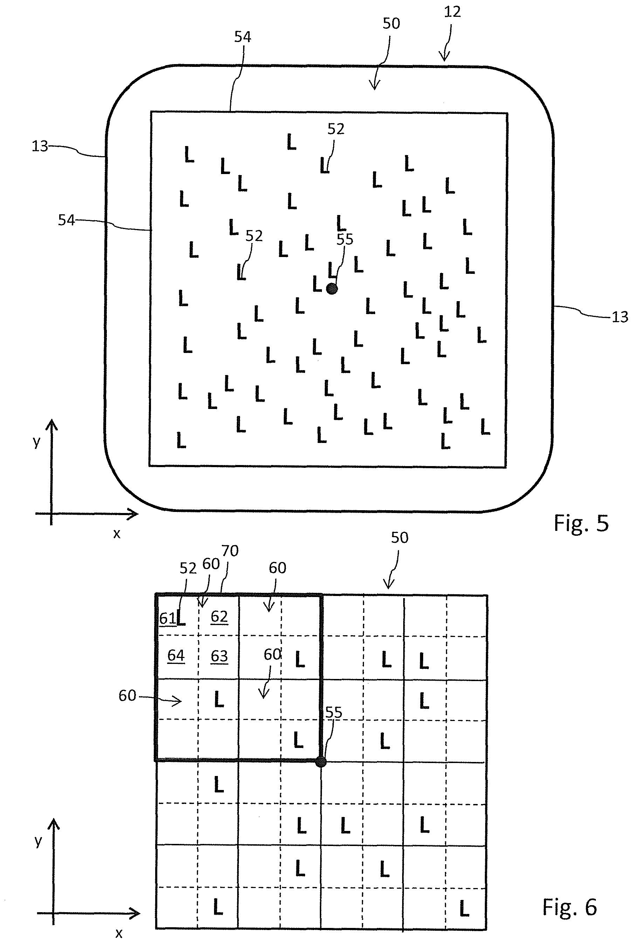

In der schematischen Darstellung gemäss Fig. 4 ist die Detektionseinheit 24 vereinfacht dargestellt. Die Detektionseinheit 24 weist insbesondere eine Kamera 25 auf, die typischerweise mit ihrer optischen Achse in etwa mit dem Mittelpunkt 55 eines ersten, in den Fig. 5 und 6 gezeigten Codes 50 im Wesentlichen zusammenfällt, sobald sich die Kapsel 10 in der Leseposition L innerhalb der Brühmaschine 20 befindet. Ein erster Code 50 am Boden 12 des Kapselbechers 11 ist schematisch in Fig. 5 gezeigt. Der erste Code 50 weist einen zumindest gedachten Mittelpunkt 55 auf, welcher zentrisch bzw. mittig innerhalb der Aussenränder 54 des ersten Codes 50 liegt.

Der erste Code 50 weist ferner eine zweidimensionale Anordnung mehrerer erster Codeelemente 52 auf. Jedes der ersten Codeelemente 52 enthält eine Information, aus welcher eine von mehreren möglichen Ausrichtungen des Codes 50 in der Ebene des Bodens 12 eindeutig ableitbar ist. In der in Fig. 5 und 6 dargestellten X-Y-Ebene, welche beispielsweise die Bildebene der Detektionseinheit 24 wiedergibt oder mit dieser zusammenfällt, kann der Code 50 insgesamt in vier verschiedenen Ausrichtungen angeordnet sein. Die einzelnen Ausrichtungen können beispielsweise durch eine Drehung der Kapsel 10 um jeweils 90° bezüglich ihrer Drehachse 15 eingenommen werden. Die Drehachse 15 des Kapselbechers 11 kann dabei mit dem gedachten Mittelpunkt 55 des ersten Codes 50 zusammenfallen.

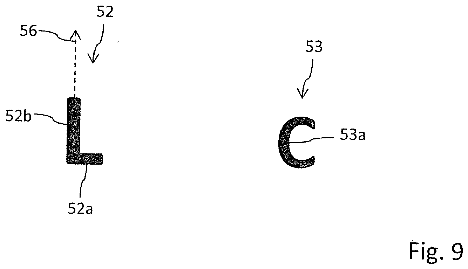

Erkennbar sind sämtliche ersten Codeelemente 52 des ersten Codes 50 identisch bzw. im Wesentlichen identisch ausgebildet. Sie weisen eine L-förmige Kontur mit einem ersten, sich in Fig. 5 und Fig. 9 horizontal erstreckten Linienabschnitt 52a und mit einem zweiten, im Wesentlichen vertikal ausgerichteten Linienabschnitt 52b auf. In der in den Fig. 5 und 9 gezeigten Ausrichtung des Codes 50 und seiner einzelnen Codeelemente 52 liegt der Schnittpunkt der Linienabschnitte 52a, 52b links unten. Ein kurzer Schenkel bzw. der erste Linienabschnitt 52a erstreckt sich vom Schnittpunkt horizontal nach rechts, während der längere, d.h. der zweite Linienabschnitt 52b sich vom Schnittpunkt der Linienabschnitte 52a, 52b vertikal nach oben erstreckt.

Jene Anordnung und Ausrichtung der einzelnen Linienabschnitte 52a, 52b macht eine eindeutige Bestimmung der Ausrichtung des zugehörigen Codeelements 52 und des hiervon gebildeten Codes 50 möglich. Insbesondere kann dem Codeelement 52 eine Zeigerstruktur 56 eindeutig zugeordnet werden. Vorliegend ist in Fig. 9 beispielsweise eine Zeigerstruktur 56 in Verlängerung des zweiten Linienabschnitts 52b gezeigt, wobei die Zeigerstruktur 56 vom Schnittpunkt der beiden Linienabschnitte 52a, 52b weg weist. Bei einer Drehung des Codes 50 und seiner Codeelemente 52, beispielsweise um 90° im Uhrzeigersinn, ergibt sich eine entsprechende Drehung der Linienabschnitte 52a, 52b sowie der zugehörigen Zeigerstruktur 56. Diese würde sodann horizontal nach rechts zeigen. Indem sämtliche Codeelemente 52 im Wesentlichen identisch zueinander ausgerichtet sind und indem die Orientierung der Codeelemente 52 fest mit der Orientierung des Codes 50 verknüpft ist, kann durch die Bestimmung der Ausrichtung eines einzelnen beliebigen Codeelements 52 die Ausrichtung bzw. Orientierung des Codes 50 in der Ebene des Bodens 12 zwischen den mehreren möglichen Ausrichtungen vergleichsweise einfach sowie mit geringem soft- und hardwaretechnischem Aufwand ermittelt werden.

Es ist hierbei insbesondere von Vorteil, wenn zumindest ein Linienabschnitt 52a, 52b der ersten Codeelemente 52 im Wesentlichen parallel zu den Aussenrändern 13 des quadratischen Bodens 12 und/oder im Wesentlichen parallel zu den Aussenrändern 54 des im Wesentlichen rechteckigen oder quadratischen Codes 50 verläuft. Ferner erweist sich eine rechtwinklige Anordnung der unterschiedlich langen Linienabschnitte 52a, 52b für eine besonders robuste und präzise Lageerkennung der Codeelemente 52 als vorteilhaft. Die Detektionseinheit 24 kann insbesondere eine regelmässige zweidimensionale Anordnung mehrerer Detektorpixel aufweisen, die horizontal nebeneinander und vertikal untereinander, entsprechend der X-Y-Ebene angeordnet sein können. Indem die Linienabschnitte 52a, 52b der ersten Codeelemente 52 entweder vertikal oder horizontal bezüglich der X- bzw. Y-Achse ausgerichtet sind, kann selbst bei einer niedrigen Auflösung der Detektionseinheit oder selbst bei Abbildungsfehlern immer noch eine für die Bestimmung der Ausrichtung des Codes 50 ausreichende Bilderkennung bereitgestellt werden.

Die Verwendung L-förmiger Codeelemente 52 ist lediglich beispielhaft beschrieben und ist nicht zwingend vorzusehen. Grundsätzlich ist denkbar, auch andere, wie in Fig. 9 gezeigte Codeelemente 53 mit einer beispielsweise C-förmigen Grundgeometrie und einem Bogenabschnitt 53a zu verwenden. Gleichermassen sind auch U-förmige, V-förmige oder T-förmige Codeelemente oder Codeelemente in Form von asymmetrischen Flächen denkbar. Einzige Anforderung an die Codeelemente kann darin bestehen, dass die Codeelemente eine klare und eindeutige Orientierung in der Ebene in sich tragen.

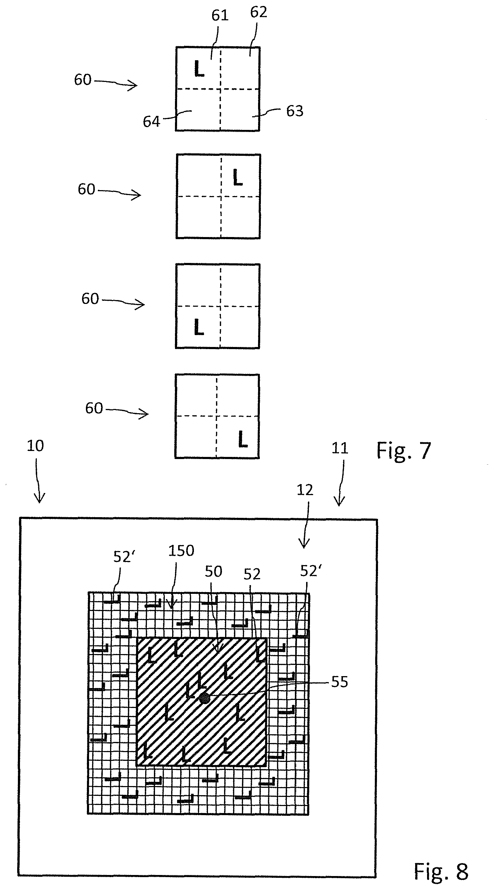

In Fig. 6 ist schematisch dargestellt, dass der erste Code 50 in eine regelmässige gedachte Anordnung von Codefeldern 61, 62, 63, 64 unterteilt ist, welche zumindest paarweise zu Codegruppen 60 zusammengefasst sind. Es ist hierbei lediglich nur ein einziges Codefeld 61, 62, 63, 64 innerhalb einer Codegruppe 60 mit einem Codeelement 52 versehen, während die übrigen Codefelder 61, 62, 63, 64 einer Codegruppe 60 frei von Codeelementen 52 bleiben. In Fig. 7 sind die unterschiedlichen denkbaren Positionen eines Codeelements 52 in einer aus insgesamt vier Codefeldern 61, 62, 63, 64 gebildeten Codegruppe 60 gezeigt. Die vier in Fig. 7 dargestellten Codegruppen 60 repräsentieren jeweils einen von vier unterschiedlichen Zuständen. Insoweit repräsentiert eine von insgesamt vier Codefeldern gebildete Codegruppe 60 eine Information von insgesamt 2 Bit (2² = 4).

Die Regel, nach welcher jede Codegruppe 60 mit nur einem einzigen Codeelement 52 versehen ist, bewirkt, dass die auf die Flächengrösse der Codegruppen 60 normierte Flächendichte an ersten Codeelementen 52 über die Gesamtfläche des ersten Codes 50 konstant ist. Ferner enthält jedes beliebige, eine ganzzahlige Anzahl an Codegruppen aufweisende Flächensegment des ersten Codes 50 eine identische Informationsdichte. Letztlich ist die lokale Position eines Codeelements innerhalb der Codegruppe Träger der betreffenden Information. Dadurch, dass die Codeinformation in der Position einzelner Codeelemente 52 relativ zu den Codegruppen 60 bzw. relativ zum Aussenrand 54 des Codes 50 enthalten ist, kann die Codeinformation durch einen einzigen Typ identischer Codeelemente 52 im Code hinterlegt werden.

Es ist ferner vorgesehen, dass eine Codegruppe 60 zumindest vier Codefelder 61, 62, 63, 64 und hiermit verbunden eine Mindestinformation mit 2 Bit Länge aufweist. Ferner können mehrere Codegruppen 60 und/oder mehrere Codefelder 61, 62, 63, 64 zu einem Codewort 70 zusammengefasst werden. In der in Fig. 6 gezeigten Ausgestaltung sind die im linken oberen Quadranten des Codes 50 vorgesehenen Codegruppen 60 zu einem Codewort 70 zusammengefasst, welches insgesamt sechzehn Codefelder 61, 62, 63, 64 aufweist.

Gemäss der Forderung, dass eine Codegruppe 60 nur ein einziges Codeelement 52 enthalten oder aufweisen darf, kann eine erste Integritätsprüfung des Codes 50 unabhängig von einer Decodierung des Codes 50 und somit bereits direkt auf der Basis eines aufgenommenen Bildes des Codes 50 erfolgen. Erkennt die Detektionseinheit 24 beispielsweise, dass in mehreren Codefeldern 60 mehr als nur ein Codeelement 52 enthalten ist, so können die entsprechenden Codebereiche verworfen werden. In gleicher Art und Weise kann auch die Anzahl an Codeelementen 52 innerhalb eines Codeworts 70 überprüft werden.

Es ist ferner vorgesehen, dass die Codeinformation des Codes 50 redundant in mehreren Codewörtern 70 enthalten ist, beispielsweise über eine Reed-Solomon-Codierung oder eine andere Form von Redundanzcodierung. Auf diese Art und Weise kann sichergestellt werden, dass bei bereichsweisen Verschmutzungen im Bereich des Codes 50 oder der Detektionseinheit 24 der Code 50 und die hierin enthalten Codeinformation verlässlich auslesbar sind. Es ist dabei insbesondere denkbar, dass beispielsweise durch Zuordnung und Identifizieren einzelner Codeelemente 52 zu einzelnen Codewörtern 70 die Abbildungs- oder Auslesequalität einzelner Codewörter 70 ermittelt wird. Sollte beispielsweise für ein Codewort 70 in einem aufgenommenen Bild eine geforderte Anzahl an Codeelementen 52 nicht enthalten sein, so ist dies ein Indiz dafür, dass das betreffende Codewort 70 einer Verschmutzung oder einem Abbildungsfehler unterliegt. Aus der Menge der Codewörter 70 werden typischerweise nur diejenigen für die Decodierung ausgewählt, welche eine vorgegebene Anzahl von Codeelementen 52 aufweisen.

Sind für die Decodierung nicht genügend komplette Codewörter 70 vorhanden können an den betreffenden Stellen mehrere infrage kommende Abschätzungen oder Annahmen getroffen werden. Im Zuge einer Integritätsprüfung der sich nachfolgend aus der jeweiligen Annahme ergebenden Codeinformationen bzw. einzelner Informationsbits, kann dann nach dem Decodieren entschieden werden, ob die Annahme richtig war oder nicht. Dementsprechend kann aufgrund der Integritätsprüfung auch eine andere Annahme getroffen werden. Jener Vorgang kann iterativ solange wiederholt werden, bis die sich aus der getroffenen Annahme ergebende Codeinformation die Kriterien der Integritätsprüfung erfüllt.

Ein Codewort 70 kann prinzipiell neben der in Fig. 6 dargestellten Gruppierung einzelner Codegruppen 60 auch beispielsweise aus einer oder mehreren Codegruppen und zusätzlich aus einem oder mehreren Codefeldern bestehen, sodass die Gesamtanzahl an Codefeldern 61, 62, 63, 64 eines Codeworts 70 ein ungeradzahliges Vielfaches der Anzahl an Codefeldern 61, 62, 63, 64 pro Codegruppe 60 ist. Es ist hierbei denkbar, dass einzelne Codefelder 61, 62, 63, 64 eine Art Prüfbit oder Prüfcode enthalten, während die Codewörter 70 Träger der eigentlichen Codeinformation sind.

In der weiteren Ausgestaltung einer Kapsel 10 ist gemäss der Darstellung der Fig. 8 denkbar, dass am Boden 12 des Kapselbechers 11 nicht nur ein erster Code 50, sondern zusätzlich zum ersten Code 50 noch ein zweiter Code 150 vorgesehen ist. Während der erste Code 50 mit seinen ersten Codeelementen 52 in etwa mittig oder in einem mittigen Bereich des Bodens 12 angeordnet ist, befindet sich der zweite Code 150 mit seinen zweiten Codeelementen 52', bezogen auf einen geometrischen Mittelpunkt des ersten Codes 50 radial ausserhalb des ersten Codes 50. In der Ausführungsform gemäss Fig. 8 umschliesst der zweite Code 150 den ersten Code 50 in Umfangsrichtung vollständig. Erster und zweiter Code 50, 150 weisen dabei jeweils eine rechteckige oder quadratische Aussenkontur auf. Mit anderen Worten befindet sich der erste Code 50 innerhalb des zweiten Codes 150.

Die Codes 50, 150 sind jedoch nicht überdeckend ausgestaltet. Im Bereich des innenliegenden ersten Codes 50 befinden sich ausschliesslich erste, dem ersten Code zugehörige Codeelemente 52. Die zweiten Codeelemente 52' können identisch zu den ersten Codeelementen 52' ausgestaltet sein. Es ist dabei jedoch vorgesehen, dass dann erste und zweite Codeelemente 52, 52' zur eindeutigen und besseren Unterscheidung von erstem und zweitem Code 50, 150 unterschiedlich ausgerichtet sind. Sämtliche ersten Codeelemente 52 sind hierbei im Wesentlichen identisch ausgerichtet, während auch sämtliche zweiten Codeelemente 52' im Wesentlichen identisch ausgerichtet sind. Im in Fig. 8 gezeigten Ausführungsbeispiel ist die Orientierung der zweiten Codeelemente 52' im Vergleich zur Orientierung der ersten Codeelemente 52 um 90° entgegen dem Uhrzeigersinn gedreht.

Es ist jedoch abweichend hiervon denkbar, dass beispielsweise die zweiten Codeelemente 52' anstelle einer L-förmigen Kontur eine andere Geometrie, beispielsweise eine C-förmige Kontur oder eine U-förmige Kontur aufweisen, die als solches von der Kontur und Geometrie der ersten Codeelemente 52 visuell unterscheidbar ist. Für die Bestimmung der Ausrichtung von erstem und zweitem Code 50, 150 ist es prinzipiell ausreichend, wenn lediglich eines von ersten und zweiten Codeelementen 52, 52' eine Information enthält, aus welcher eine von mehreren möglichen Ausrichtungen des Codes 50, 150 in der Ebene des Bodens 12 eindeutig ableitbar ist. Anstelle von gedrehten L-förmigen zweiten Codeelementen 52' könnten auch punktförmige oder rotationssymmetrische Codeelemente prinzipiell Verwendung finden.

Die ersten und zweiten Codes 50, 150 enthalten typischerweise unterschiedliche Codeinformationen. Der erste Code 50 enthält typischerweise für einen Brühvorgang vorgesehene Informationen, beispielsweise hinsichtlich Brühprogramm, Wassermenge, Brühtemperatur, Brühdruck, Durchflussrate, Pumpenleistung, Brühzeit oder Vorbrühzeit, während der aussenliegende und womöglich nur optional für bestimmte Brühmaschinen 20 zu verwendende Code 150 weitere Zusatzinformationen zum Extraktionsgut, wie beispielsweise ein Mindesthaltbarkeitsdatum, einen Produktionsort, einen Herkunftsort oder eine Chargennummer enthalten kann.

Die unterschiedlichen bzw. unterschiedlich ausgerichteten Codeelemente 52, 52' ermöglichen eine visuelle Trennung von erstem und zweitem Code 50, 150, sodass diese separat und unabhängig voneinander detektiert, ausgelesen und decodiert werden können. Die Ausrichtung der zweiten Codeelemente 52' relativ zu den Aussenrändern 54 des ersten Codes 50 oder des zweiten Codes 150 sowie die Anordnung der zweiten Codeelemente 52' untereinander, insbesondere deren Anordnung in eine zumindest gedachte oder virtuelle Unterteilung in Codefelder 61, 62, 63, 64, Codegruppen 60 und Codewörter 70 kann im Wesentlichen identisch zu den ersten Codeelementen 52 ausgestaltet sein. Auf diese Art und Weise kann sowohl der erste Code 50 als auch der zweite Code 150 mit ein und derselben Bildauswertung erkannt, ausgelesen und decodiert werden.

Die Redundanzprüfung ist vorliegend derart gewählt, dass bereits bei einer Lesbarkeit von 10 % bis 15 % der Codefläche die Codeinformation decodierbar ist. Durch die homogene Verteilung von Codegruppen 60 und Codewörtern 70 über die Fläche des Codes 50 ist die Codeinformation über der Fläche des Codes 50 quasi gleichverteilt. Dies macht den Code 50 besonders robust bei bereichsweisen Verschmutzungen oder Abbildungsfehlern.

Durch die vorgegebene Randbedingung, dass eine von Codeelementen 61, 62, 63, 64 gebildete Codegruppe 60 genau ein Codeelement 52 aufweist, kann eine Integritäts- und Plausibilitätsprüfung von Codewörtern 70 direkt auf Bitebene und auf Bildebene erreicht werden. Ferner kann durch die homogene Verteilung von Codeelementen innerhalb von Codegruppen eine konstante Schreibzeit für den Code 50 am Boden 12 des Kapselbechers 11 erreicht werden. Dies kann mit einem Schreibgerät erreicht werden, welches eine Schreibzeit aufweist, die proportional zur zu beschreibenden Fläche ist. Das Schreibgerät kann beispielsweise als Galvo-Laserscanner ausgestaltet sein. Pro Zeiteinheit wird beim Beschriften des Bodens 12, etwa mittels Laser, immer dieselbe Anzahl an Codeelementen 52 geschrieben.

Es ist sogar denkbar, eine Integritätsprüfung des Codes 50 bzw. der im Code 50 enthaltenen Codewörter 70 oder Codegruppen 60 rein auf Bildebene durchzuführen. Je besser eine Integritätsprüfung auf Bildebene erfolgt, desto weniger Prüfbits sind den Codewörtern 70 hinzuzufügen. Es ist sogar denkbar, eine Integritätsprüfung des Codes 50 vollständig auf Bildebene durchzuführen, sodass auf Prüfbits innerhalb des Codes 50 weitgehend verzichtet werden kann.

### Bezugszeichenliste

- 10: Kapsel
- 11: Kapselbecher
- 12: Boden
- 13: Aussenrand
- 14: Seitenwand
- 15: Drehachse
- 16: Kapseldeckel
- 18: Flanschabschnitt
- 20: Brühmaschine
- 21: Aufnahme
- 22: Brüheinheit
- 24: Detektionseinheit
- 25: Kamera
- 26: Brühkammer
- 28: Auffangbehälter
- 29: Auslass
- 30: Steuerung
- 50: Code
- 52: Codeelement
- 52': Codeelement
- 52a: Linienabschnitt
- 52b: Linienabschnitt
- 53: Codeelement
- 53a: Bogenabschnitt
- 54: Aussenrand
- 55: Mittelpunkt
- 56: Zeigerstruktur
- 60: Codegruppe
- 61: Codefeld
- 62: Codefeld
- 63: Codefeld
- 64: Codefeld
- 70: Codewort
- 150: Code

## Patentansprüche

1. Kapsel zur Getränkezubereitung in einer Brühmaschine, wobei die Kapsel einen mit einem Extraktionsgut gefüllten Kapselbecher (11) mit einem im Wesentlichen quadratischen Boden (12) und einen den Kapselbecher (11) verschliessenden Kapseldeckel (16) aufweist, **gekennzeichnet durch** zumindest einen ersten optisch lesbaren Code (50) am Boden (12) des Kapselbechers (11), welcher eine zweidimensionale Anordnung mehrerer erster Codeelemente (52, 53) aufweist, die jeweils eine zweidimensionale Gestalt und eine derartige geometrische Kontur aufweisen, die es erlaubt, die Ausrichtung der Codeelemente (52, 53) in der Ebene des Bodens zu bestimmen, wodurch sie eine Information enthalten, aus welcher eine von mehreren möglichen Ausrichtungen des Codes (50) in der Ebene des Bodens (12) eindeutig ableitbar ist.

2. Kapsel nach Anspruch 1, wobei der erste Code (50) eine Anzahl im Wesentlichen identischer und im Wesentlichen identisch ausgerichteter erster Codeelemente (52, 53) aufweist.

3. Kapsel nach einem der vorhergehenden Ansprüche, wobei die ersten Codeelemente (52) zumindest zwei gerade und unter einem vorgegebenen Winkel aneinander angrenzende Linienabschnitte (52a, 52b) aufweisen.

4. Kapsel nach Anspruch 3, wobei zumindest ein Linienabschnitt (52a, 52b) der ersten Codeelemente (52) im Wesentlichen parallel zu den Aussenrändern (54) des im Wesentlichen rechteckigen oder quadratischen Codes (50) verläuft.

5. Kapsel nach einem der vorhergehenden Ansprüche 3 oder 4, wobei zumindest ein Linienabschnitte (52a, 52b) der ersten Codeelemente (52) im Wesentlichen parallel zu den Aussenrändern (13) des quadratischen Bodens (12) verläuft.

6. Kapsel nach einem der vorstehenden Ansprüche, **dadurch gekennzeichnet, dass** die ersten Codeelemente (52) im Wesentlichen L-förmig sind.

7. Kapsel nach einem der vorhergehenden Ansprüche 1 bis 5, wobei die ersten Codeelemente (53) zumindest einen Bogenabschnitt (53a) aufweisen.

8. Kapsel nach einem der vorstehenden Ansprüche, **dadurch gekennzeichnet, dass** die Codeelemente (52, 53) auf den Boden (12) des Kapselbechers (11) aufgelasert oder in den Boden (12) eingelasert sind.

9. Kapsel nach einem der vorstehenden Ansprüche, **dadurch gekennzeichnet, dass** der erste Code (50) 50 - 400 Codeelemente (52, 53), vorzugsweise 70 - 100 Codeelemente (52, 53) umfasst.

10. Kapsel nach einem der vorhergehenden Ansprüche, wobei der erste Code (50) in eine regelmässige gedachte Anordnung von Codefeldern (61, 62, 63, 64) unterteilt ist, welche zumindest paarweise zu Codegruppen (60) zusammengefasst sind, wobei nur ein einziges Codefeld (61, 62, 63, 64) innerhalb einer Codegruppe (60) mit einem Codeelement (52, 53) versehen ist.

11. Kapsel nach Anspruch 9, wobei die lokale Position eines Codeelements (52, 53) innerhalb der Codegruppe (60) eine Information enthält.

12. Kapsel nach einem der vorhergehenden Ansprüche, **gekennzeichnet durch** zumindest einen zweiten optisch lesbaren Code (150) am Boden (12) des Kapselbechers (11), welcher eine zweidimensionale Anordnung mehrerer zweiter Codeelemente (52') aufweist, die bezogen auf einen Mittelpunkt (55) des ersten Codes (50) radial ausserhalb des ersten Codes (50) liegen.

13. Kapsel nach Anspruch 12, wobei die ersten Codeelemente (52) und die zweiten Codeelemente (52') im Wesentlichen identisch sind und die ersten Codeelemente (52) im Vergleich zu den zweiten Codeelementen (52') unterschiedlich ausgerichtet sind.

14. System zum Zubereiten eines Getränkes aus einer Kapsel (10) nach einem der vorhergehenden Ansprüche, umfassend
- eine Brühmaschine (20), die
∘ eine Brühkammer (26) zur Aufnahme einer Kapsel mit einem Kapselbecher (11) mit einem im Wesentlichen quadratischen Boden (12),
∘ sowie eine optischen Detektionseinheit (24) zum Auslesen eines Codes (50, 150) mit einer zweidimensionalen Anordnung mehrerer Codeelemente (52, 53) auf dem Boden (12) während die Kapsel (10) sich in einer Leseposition (L) oberhalb der Brühkammer (26) befindet,
aufweist,
wobei vier verschiedene Ausrichtungen der Kapsel (10) in der Leseposition (L) möglich sind und die Detektionseinheit (24) derart ausgebildet ist, dass sie die Ausrichtung der Codeelemente (52, 53) erkennt und daraus die Ausrichtung des Codes (50, 150) ableitet,
- wobei das System ferner eine Kapsel (10) nach einem der Ansprüche 1-13 aufweist, aus welchen die Detektionseinheit die Ausrichtung des Codes ableitet.

15. Verfahren zum Identifizieren einer Kapsel (10) in einer Brühmaschine (20) zum Zubereiten eines Getränks, wobei die Kapsel einen Kapselbecher (11) mit einem im Wesentlichen quadratischen Boden (12) und mit einem Code (50, 150) mit einer zweidimensionalen Anordnung mehrerer Codeelemente (52, 53) auf dem Boden (12) aufweist, und die Codeelemente eine zweidimensionale Gestalt und eine derartige geometrischen Kontur aufweisen, die es erlaubt, die Ausrichtung der Codeelemente (52, 53) in der Ebene des Bodens zu bestimmen, mit den Schritten:
- Übergabe der von einem Benutzer in die Brühmaschine (20) eingelegten Kapsel (10) in eine Leseposition (L),
- Erkennung von Codeelementen (52, 53) und Bestimmung der Ausrichtung des Codes (50, 150) anhand der Ausrichtung der Codeelemente (52, 53),
- Decodierung des Codes (50, 150) und Identifikation des Kapseltyps anhand der in dem Code (50, 150) enthaltenen Information.

## Claims

1. A capsule for drinks preparation in a brewing machine, wherein the capsule comprises a capsule beaker (11) which is filled with an extraction material and has an essentially square base (12), and a capsule cover (16) closing the capsule beaker (11), **characterised by** at least one first optically readable code (50) on the base (12) of the capsule beaker (11), said code comprising a two-dimensional arrangement of several first code elements (52, 53), which each comprises a two-dimensional design and a geometrical contour that permits for determination of the alignment of the code elements (52, 53) in the plane of the base, whereby comprising information, from which one of several possible alignments of the code (50) in the plane of the base (12) can be unambiguously derived.

2. The capsule according to claim 1, wherein the first code (50) comprises a number of essentially identical and essentially identically aligned first code elements (52, 53).

3. The capsule according to any one of the preceding claims, wherein the first code elements (52) comprise at least two straight line sections (52a, 52b) which are adjacent to one another at a predefined angle.

4. The capsule according to claim 3, wherein at least one line section (52a, 52b) of the first code elements (52) runs essentially parallel to the outer edges (54) of the essentially rectangular or square code (50).

5. The capsule according to one of the claims 3 or 4, wherein at least one line section (52a, 52b) of the first code elements (52) runs essentially parallel to the outer edges (13) of the square base (12).

6. The capsule according to any one of the preceding claims, **characterised in that** the first code elements (52) are essentially L-shaped.

7. The capsule according to any one of the preceding claims 1 to 5, wherein the first code elements (53) comprise at least one arch section (53a).

8. The capsule according to any one of the preceding claims, wherein the code elements (52, 53) are lasered onto the base (12) of the capsule beaker (11) or into the base (12).

9. The capsule according to any one of the preceding claims, wherein the first code (50) comprises 50 - 400 code elements (52, 53), preferably 70 - 100 code elements (52, 53).

10. The capsule according to any one of the preceding claims, wherein the first code (50) is subdivided into a regular, imagined arrangement of code fields (61, 62, 63, 64), which at least in pairs are grouped into code groups (60), wherein only a single code field (61, 62, 63, 64) within a code group (60) is provided with a code element (52, 53).

11. The capsule according to claim 9, wherein the local position of a code element (52, 53) within the code group (60) comprises information.

12. The capsule according to any one of the preceding claims, **characterised by** at least one second optically readable code (150) on the base (12) of the capsule beaker (11), said second optically readable code comprising a two-dimensional arrangement of several second code elements (52') which lie radially outside the first code (50) with respect to a middle point (55) of the first code (50).

13. The capsule according to claim 12, wherein the first code elements (52) and the second code elements (52') are essentially identical and the first code elements (52) are aligned differently compared to the second code elements (52').

14. A system for preparing a drink from a capsule (10) according to any one of the preceding claims, comprising:
- a brewing machine (20) which comprises
° a brewing chamber (26) for receiving a capsule with a capsule beaker (11) with an essentially square base (12),
° as well as an optical detection unit (24) for reading out a code (50, 150) with a two-dimensional arrangement of several code elements (52, 53) on the base (12) whilst the capsule (10) is located in a read position (L) above the brewing chamber (26),
wherein four different alignments of the capsule (10) are possible in the read position (L) and the detection unit (24) is designed in a manner such that it recognises the alignment of the code elements (52, 53) and derives the alignment of the code (50, 150) from this,
wherein the system further comprises a capsule (10) according to any one of claims 1-13 from which the detection unit derives the alignment of the code.

15. A method for identifying a capsule (10) in a brewing machine (20) for preparing a drink, the capsule comprising a capsule beaker (11) with an essentially square base (12) and with a code (50, 150) with a two-dimensional arrangement of several code elements (52, 53) on the base (12), the code elements comprising a two-dimensional design and a geometrical contour that permits for determination of the alignment of the code elements (52, 53) in the plane of the base the method comprising the steps:
- transferring the capsule (10) inserted into the brewing machine (20) by the user, into a read position (L),
- recognising code elements (52, 53) and determining the alignment of the code (50, 150) on the basis of the alignment of the code elements (52, 53)
- decoding the code (50, 150) and identifying the capsule type on the basis of the information contained in the code (50, 150).

## Revendications

1. Capsule de préparation de boissons dans une machine d'infusion, la capsule présentant un godet de capsule (11) rempli d'un matériau à extraire et présentant un fond (12) essentiellement carré et un couvercle de capsule (16) qui ferme le godet de capsule (11), **caractérisée par**
au moins un premier code (50) lisible optiquement prévu sur le fond (12) du godet de capsule (11), le code présentant un agencement bidimensionnel de plusieurs premiers éléments de code (52, 53) qui présentent chacun une forme bidimensionnelle et un contour géométrique qui permet de déterminer l'orientation des éléments de code (52, 53) dans le plan du fond, de sorte qu'ils contiennent une information à partir de laquelle l'une des différentes orientations possibles du code (50) dans le plan du fond (12) peut être déduite de manière univoque.

2. Capsule selon la revendication 1, dans laquelle le premier code (50) présente plusieurs premiers éléments de code (52, 53) essentiellement identiques et orientés essentiellement à l'identique.

3. Capsule selon l'une des revendications précédentes, dans laquelle les premiers éléments de code (52) présentent au moins deux segments de ligne (52a, 52b) rectilignes et formant l'un avec l'autre un angle prédéterminé.

4. Capsule selon la revendication 3, dans laquelle au moins un segment de ligne (52a, 52b) des premiers éléments de code (52) s'étend essentiellement en parallèle aux bords extérieurs (54) du code (50) essentiellement rectangulaire ou carré.

5. Capsule selon l'une des revendications 3 ou 4 qui précèdent, dans laquelle au moins un segment de ligne (52a, 52b) des premiers éléments de code (52) s'étend essentiellement en parallèle aux bords extérieurs (13) du fond carré (12).

6. Capsule selon l'une des revendications précédentes, dans laquelle les premiers éléments de code (52) ont essentiellement la forme d'un L.

7. Capsule selon l'une des revendications 1 à 5 qui précèdent, dans laquelle les premiers éléments de code (53) présentent au moins un segment incurvé (53a).

8. Capsule selon l'une des revendications précédentes, **caractérisée en ce que** les éléments de code (52, 53) sont appliqués par laser sur le fond (12) du godet de capsule (11) ou dans ce fond (12).

9. Capsule selon l'une des revendications précédentes, **caractérisée en ce que** le premier code (50) comporte de 50 à 400 éléments de code (52, 53) et de préférence de 70 à 100 éléments de code (52, 53).

10. Capsule selon l'une des revendications précédentes, dans lequel le premier code (50) est divisé en un ensemble imaginaire régulier de champs de code (61, 62, 63, 64) qui sont rassemblés au moins deux à deux pour former des groupes (50) de codes, un seul champ de code (61, 62, 63, 64) d'un groupe (60) de codes étant doté d'un élément de code (52, 53).

11. Capsule selon la revendication 9, dans laquelle la position locale d'un élément de code (52, 53) à l'intérieur du groupe (60) de codes contient une information.

12. Capsule selon l'une des revendications précédentes, **caractérisé par** au moins un deuxième code (150) lisible optiquement prévu sur le fond (12) du godet de capsule (11), le deuxième code présentant un agencement bidimensionnel de plusieurs deuxièmes éléments de code (52') qui sont situés radialement à l'extérieur du premier code (50) par rapport au centre (55) du premier code (50).

13. Capsule selon la revendication 12, dans laquelle les premiers éléments de code (52) et les deuxièmes éléments de code (52') sont essentiellement identiques et dans laquelle les premiers éléments de code (52) sont alignés d'une autre manière que les deuxièmes éléments de code (52').

14. Système de préparation d'une boisson à partir d'une capsule (10) selon l'une des revendications précédentes, le système comprenant :
une machine d'infusion (20) qui présente une chambre d'infusion (26) qui reprend une capsule dotée d'un godet de capsule (11) dont le fond (12) est essentiellement carré et
une unité (24) de détection optique qui lorsque la capsule (10) se trouve dans une position de lecture (L) située au-dessus de la chambre d'infusion (26), lit un code (50, 150) qui présente un agencement bidimensionnel de plusieurs éléments de code (52, 53) prévus sur le fond (12),
quatre orientations différentes de la capsule (10) placée dans la position de lecture (L) étant possibles et l'unité de détection (24) étant configurée de façon à reconnaître l'orientation des éléments de code (52, 53) et en déduire l'orientation du code (50, 150),
le système présentant en outre une capsule (10) selon l'une des revendications 1 à 13,
à partir de quoi l'unité de détection déduit l'orientation du code.

15. Procédé d'identification d'une capsule (10) dans une machine d'infusion (20) prévue pour la préparation d'une boisson, la capsule présentant un godet de capsule (11) dont le fond (12) est essentiellement carré et le fond (12) présentant un code (50, 150) doté d'un agencement bidimensionnel de plusieurs éléments de code (52, 53), les éléments de code présentant une forme bidimensionnelle et un contour géométrique qui permet de déterminer l'orientation des éléments de code (52, 53) dans le plan du fond, le procédé présentant les étapes suivantes :
transfert de la capsule (10) insérée par un utilisateur dans la machine d'infusion (20) dans une position de lecture (L),
détection d'éléments de code (52, 53) et détermination de l'orientation du code (50, 150) à l'aide de l'orientation des éléments de code (52, 53) et
décodage du code (50, 150) et identification du type de capsule à l'aide de l'information qui contient le code (50, 150).
